(19) Europäisches Patentamt / European Patent Office / Office européen des brevets

(11) **EP 1 987 181 B1**

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(51) Int Cl.:
***D01F 11/16*** *(2006.01)*

(21) Anmeldenummer: 07704540.9

(22) Anmeldetag: **13.02.2007**

(86) Internationale Anmeldenummer:
**PCT/EP2007/051364**

(87) Internationale Veröffentlichungsnummer:
**WO 2007/093582 (23.08.2007 Gazette 2007/34)**

(54) **KATALYTISCHES ÄTZEN VON KOHLENSTOFFFASERN**

CATALYTIC ETCHING OF CARBON FIBRES

GRAVURE CATALYTIQUE DE FIBRES DE CARBONE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.02.2006 DE 102006007208**

(43) Veröffentlichungstag der Anmeldung:
**05.11.2008 Patentblatt 2008/45**

(73) Patentinhaber: **Bayer Technology Services GmbH 51368 Leverkusen (DE)**

(72) Erfinder:
  • **MUHLER, Martin**
    **44780 Bochum (DE)**
  • **XIA, Wei**
    **45145 Essen (DE)**

(56) Entgegenhaltungen:
**US-A- 3 769 390**

## Beschreibung

Die vorliegende Erfindung betrifft ein Verfahren zur Ätzung von Kohlenstofffasern, insbesondere Kohlenstoffnanofasern sowie die durch dieses Verfahren erhältlichen Kohlenstoffnanofasern und deren Verwendung.

## Hintergrund der Erfindung

Kohlenstofffasern wie z. B. Kohlenstoffnanofasern sind vielversprechende Materialien für viele mögliche Anwendungen, wie z. B. leitende und hochfeste Verbundwerkstoffe, Energiespeicher und -umwandler, Sensoren, Feldemissionsanzeigen und Strahlungsquellen, und nanoskalige Halbleiterelemente und Prüfspitzen (Baughman, R. H. et al., Science 297:787-792 (2002)). Ein anderer vielversprechender Anwendungsbereich ist die Katalyse mit Kohlenstoffnanofasern als Katalysatoren oder als Träger für heterogene Katalysatoren (de Jong, K. P. und Geus, J. W., Catal. Rev.-Sci. Eng. 42: 481-510 (2000) oder als nanoskalige Reaktoren für katalytische Synthesen (Nhut, J. M. et al., Appl. Catal. A. 254: 345-363 (2003)). Es ist häufig notwendig, die Oberfläche entweder chemisch oder physikalisch für die oben erwähnten Anwendungen zu modifizieren. Beispielsweise sind eine vollständige Dispersion der Nanofasern in einer Polymermatrix und die daraus resultierenden starken Wechselwirkungen zwischen Faser und Matrix vorteilhaft in Verbundwerkstoffen (Calvert, P., Nature 399: 210-21 (1999)). Als Katalysatorträger müssen Fremdatome auf den Nanofasern abgeschieden werden. Hierzu sind Ankerstellen wie funktionelle Gruppen oder Defekte notwendig. Hierfür muss die inerte Oberfläche der unbehandelten ("as-grown") Nanofasern modifiziert werden (Xia, W. et al., Chem. Mater. 17:5737-5742 (2005)). Für die Anwendung im Sensor-Bereich ist eine Bindung von chemischen Gruppen oder die Immobilisierung eines Proteins mit speziellen Erkennungszentren an den Nanofasern notwendig. Dies wird im Allgemeinen durch das Erzeugen von funktionellen Oberflächengruppen oder Oberflächendefekten verwirklicht (Dai, H., Acc. Chem. Res. 35:1035-5742 (2002)).

Motiviert durch die vielversprechenden möglichen Anwendungen wurden in den letzten 10 Jahren extensive Studien zur Oberflächenmodifikation und Funktionalisierung von Kohlenstoffnanofasern durchgeführt. Unter allen Methoden am intensivsten erforscht ist die kovalente Oberflächenfunktionalisierung, die im Allgemeinen auf starken Oxidantien wie Salpetersäure, Sauerstoffplasma, überkritischen Fluiden, Ozon o.ä. und beispielsweise anschließender Seitenkettenverlängerung basiert (Banerjee, S. et al., Adv. Mater. 17: 17-29 (2005)). Diese Oxidationsmethoden erhöhen meistens den Sauerstoffgehalt der Oberfläche, wobei durch geeignete Parameterwahl auch sichtbare physikalische Modifikationen erreicht werden können. Diese physikalischen Änderungen sind auf zwei- oder dreidimensionale Oberflächendefekte mit unvorhersehbaren Strukturen in unbekannten Positionen limitiert. Unter extremen Bedingungen, beispielsweise einer Mischung aus konzentrierter Schwefel- und Salpetersäure, werden Nanofasern in kleinere fasernförmige Einheiten gespalten (Liu, J. et al., Science 280:1253-1256 (1998)). Die Identifikation der Oberflächendefekte bleibt auf Grund der kleinen Dimensionen und der Oberflächenkrümmung von Kohlenstoffnanofasern eine Herausforderung (Ishigami, M. et al., Phys. Rev. Lett. 93:196803/4 (2001)). Rastertunnelmikroskopie (STM) ist hierbei ein sehr wirkungsvolles Werkzeug (Osváth, Z. et al., Phys. Rev. B. 72:045429/1-045429/6 (2005)). Fan und Mitarbeiter identifizierten chemische Oberflächendefekte mit Atomkraftmikroskopie (AFM) durch defektstellensensitive Oxidation mit $H_2Se$ (Fan, Y. et al., Adv. Mater. 14:130-133 (2002)). In Xia, W. et al., Chem. Mater. 17:5737-5742 (2005) wird die Veränderung der Oberfläche von Kohlenstoffnanofasern durch Ablagerung von Cyclohexan an mit Eisen beladenen Kohlenstoffnanofasern erhalten. Diese sogenannten sekundären Kohlenstoffnanofasern (baumartige Strukturen aus Stamm und Ästen) sind jedoch nicht funktional, die erhaltenen Oberflächenmodifikationen können nicht zum Beladen mit funktionalen Molekülen verwendet werden.

Die vorstehende Problematik gilt analog für Kohlenstoffmikrofasern, z. B. solche aus Polyacrylnitril (PAN) hergestellten mit Faserbündeln bis zu Millimeterbereichen, die als Endlosfasern in modernen Hochleistungsverbundwerkstoffen Anwendung finden.

Trotz der zahlreichen Bemühungen zur Oberflächenmodifikation von Kohlenstofffasern wie Kohlenstoffnanofasern kann jedoch bis jetzt keine der oben erwähnten Methoden funktionelle Oberflächengruppen oder Oberflächendefekte gezielt einführen.

## Kurzbeschreibung der Erfindung

Überraschenderweise wurde nun eine lokalisierte Ätztechnik gefunden, mit der Oberflächendefekte an vorbestimmten Stellen von Kohlenstofffasern wie mehrwandigen Kohlenstoffnanofasern (sog. multi-walled carbon nanotubes, nachfolgend kurz "MWNT" oder "Nanofasern") erzeugt werden können. Die Ätzung basiert auf der Kohlevergasung durch Wasserdampf

$$C + H_2O \xrightarrow{Fe} CO + H_2$$

wobei nanoskalige Eisenpartikel, die sich auf den Nanofasern befinden, die Vergasung katalysieren. Die Ätzung tritt an der Grenzfläche auf und ist limitiert auf die Stellen der Kohlenstofffasern, wo Eisenpartikel anwesend sind. Die Ätzung kann durch geeignete Wahl der Parameter zur Vorbehandlung (Beladung an Eisen, Temperdauer usw.) und der Prozessparameter (Reaktionszeit, Temperatur, Partialdruck des Wassers usw.) leicht gesteuert werden. Auf diese Weise können in einem umweltfreundlichen Prozess Kohlenstofffasern mit sphärischen Ätzgruben mittels preiswerter Rohstoffe (Wasser und Eisen) synthetisiert werden. Zusätzlich werden bei diesem Prozess Wasserstoff und Kohlenmonoxid produziert, welche die Hauptbestandteile von Synthesegas darstellen. Die Erfindung betrifft somit

(1) ein Verfahren zur Ätzung von Kohlenstofffasern umfassend

(a) Funktionalisierung der Oberfläche der Kohlenstofffasern durch Oxidation,
(b) Abscheidung von Metallpartikeln auf der funktionalisierten Oberfläche,
(c) Ätzen der Oberfläche durch Behandlung mit Wasserdampf, (d) Entfernen der Metallpartikel durch Säurebehandlung.

(2) geätzte Kohlenstofffasern erhältlich durch das Verfahren nach (1) und
(3) die Verwendung der geätzten Kohlenstofffasern nach (2) in Verbundstoffen, Energiespeichern, als Sensoren, als Adsorptionsmittel, Träger für heterogene Katalysatoren und als katalytisch aktives Material nach zusätzlicher Sauerstofffunktionalisierung.

Die Kohlenstofffasern im Sinne der vorliegenden Erfindung umfassen Kohlenstoffnanofasern und Kohlenstoffmikrofasern, sind jedoch nicht auf diese beschränkt.

**Kurzbeschreibung der Figuren**

Figur 1: Zweidimensionale schematische Abbildung der vier Hauptschritte in dem Ätzprozess. Die Nanofasern wurden zur Erhöhung der Zahl der Sauerstoffatome an der Oberfläche mit konzentrierter Salpetersäure funktionalisiert. Eisen aus Ferrocen als Precursor wurde dann aus der Dampfphase abgeschieden. Die folgende Ätzung wurde mit 1 Vol. % Wasserdampf in Helium durchgeführt. Die Metallpartikel wurden schließlich durch das Waschen mit 1 M Salpetersäure bei Raumtemperatur entfernt.

Figur 2: Schematische Abbildung der Apparatur für die Eisenabscheidung (a) und für die Wasserdampfätzung von Kohlenstoffnanofasern (b).

Figur 3: Der Verbrauch des Wassers und die Freisetzung von Kohlenmonoxid während der Wasserdampfätzung, aufgezeichnet durch Online-Massenspektroskopie.

Figur 4: SEM-Bilder der Nanofaser nach der Ätzung: (a) unbehandelt, mit den Eisennanopartikeln; (b) nach der Entfernung der Eisennanopartikel durch 1 M Salpetersäure.

Figur 5: TEM-Bilder der Nanofaser nach der Ätzung mit Wasser bei 670 °C. (a) unbehandelt, mit den Eisennanopartikeln; (b & c) nach Entfernung der Eisennanopartikel durch das Waschen mit 1 M Salpetersäure; (d) HR-TEM Bild einer durch den Ätzprozess zerstörten Wand einer Nanofaser.

Figur 6: Pulverdiffraktogramme der unbehandelten und der geätzten Nanofasern.

Figur 7: Isothermen der Stickstoffphysisorptionsmessungen für unbehandelte und geätzte Nanofasern. Der eingefügte Graph zeigt die Porenradienverteilung der geätzten Nanofasern.

**Detaillierte Beschreibung der Erfindung**

Die Kohlenstofffasern im Sinne der vorliegenden Erfindung sind Strukturen, die durch Polymerisation von ungesättigten Kohlenwasserstoffverbindungen erhältlich sind.
In einer ersten bevorzugten Ausführungsform des Verfahrens (1) sind die Kohlenstofffasern Kohlenstoffnanofasern. Diese bestehen aus Kohlenstoff, können z. B. aus Kohlenwassertoffen durch katalytische Pyrolyse hergestellt werden und sind z. B. von Applied Sciences Inc. (Cedarville, Ohio, USA) oder von Bayer MaterialScience erhältlich.
Solche Kohlenstoffnanofasern weisen üblicherweise einen äußeren Durchmesser von 50 bis 500 nm, vorzugsweise etwa 100 nm, einen inneren Durchmesser von 10 bis 100 nm, vorzugsweise etw 50 nm sowie eine Oberfläche von 10 bis 60 $m^2$/g, vorzugsweise von 20 bis 40 $m^2$/g auf. Durch das erfindungsgemäße Ätzverfahren vergrößert sich die spezifische Oberfläche der Kohlenstoffnanofasern auf 90 bis 100 $m^2$/g.
In einer zweiten bevorzugten Ausführungsform des Verfahrens (1) sind die Kohlenstofffasern Mikrofasern. Solche Mikrofasern bestehen z. B. aus Kohlenstoff, werden z. B. durch Pyrolyse von Polyacrylnitrilfasern hergestellt und sind z. B. von Zoltek Companies Inc. (St. Louis, USA) oder von Toho Tenax Europe GmbH erhältlich. Diese Mikrofasern weisen einen äußeren Durchmesser von 3 bis 10 $\mu$m, vorzugsweise etwa 6 $\mu$m sowie eine Oberfläche von kleiner als 1 $m^2$/g auf. Durch das erfindungsgemäße Ätzverfahren vergrößert sich die spezifische Oberfläche der Mikrofasern auf 5 bis 50 $m^2$/g.
In Schritt (a) des erfindungsgemäßen Verfahren wird die Oberfläche der Kohlenstofffasern durch eine oxidative Behandlung der Fasern funktionalisiert. Dies kann vorzugsweise durch Erhitzung mit oxidierenden Säuren oder Sauerstoffplasmabehandlung erfolgen. Besonders bevorzugt ist ein Erhitzen mit Salpetersäure, z. B. mit konzentrierter Salpetersäure.
In Schritt (b) des erfindungsgemäßen Verfahrens werden Metallpartikel auf die in Schritt (a) behandelte Faser aufgebracht bzw. auf dieser abgeschieden. Diese Metallpartikel sind vorzugsweise ausgewählt aus Eisen (Fe), Kobalt (Co) und Nickel (Ni), wobei Fe-Partikel besonders bevorzugt sind. Weiterhin ist bevorzugt, dass durch die Beladung 1 bis 20, vorzugsweise 5 bis 10 Gew.-% Metall, bezogen auf das Gesamtgewicht der beladenen Kohlenstoffnanofasern, aufgetragen werden. Das Aufbringen/die Abscheidung der Metallpartikel erfolgt vorzugsweise durch In-Kontakt-Bringen mit gelösten Metallsalzen oder Metallocenen (vorzugsweise Ferrocenen), insbesondere bei einer Temperatur von 100 bis 600 °C und nachfolgend Reduktion mit Wasserstoff bei einer Temperatur von 300 bis 800 °C, vorzugsweise bei etwa 500 °C.

In Schritt (c) des erfindungsgemäßen Verfahrens erfolgt das Ätzen der mit Metallpartikel dotierten Fasern. Dies erfolgt erfindungsgemäß durch Behandlung mit Wasserdampf in einer Heliumatmosphäre, wobei vorzugweise der Wasserdampfgehalt der Heliumatmosphäre 0,1 bis 10, besonders bevorzugt etwa 1 Vol.-% beträgt. Weiterhin ist bevorzugt, dass die Heliumatmosphäre 1 bis 20, vorzugsweise etwa 10 Vol.-% $H_2$ enthält, um den Metallkatalysator aktiv zu halten. Die Ätzung erfolgt bevorzugt bei einer Temperatur von 500 bis 800 °C, besonders bevorzugt oberhalb von 600 °C.

In Schritt (d) des erfindungsgemäßen Verfahrens erfolgt die Entfernung der Metallpartikel. Dies geschieht vorzugsweise durch Behandlung mit einer Säure, insbesondere wässriger Salzsäure oder einem Gemisch aus $HNO_3/H_2SO_4$.

In Abhängigkeit von dem gewünschten Verwendungszweck kann die so erhaltene Kohlenstofffaser in einem nachfolgenden Schritt (e) an den geätzten Positionen mit funktionalen Liganden beladen werden. So erfordert z. B. eine Anwendung als Katalysator eine Beladung mit den hierfür benötigten Metallatomen/- partikeln.

Die vorstehende Erfindung wird nachfolgend anhand von Kohlenstoffnanofasern näher erläutert. Dies soll jedoch den Schutzumfang des Patents nicht einschränken.

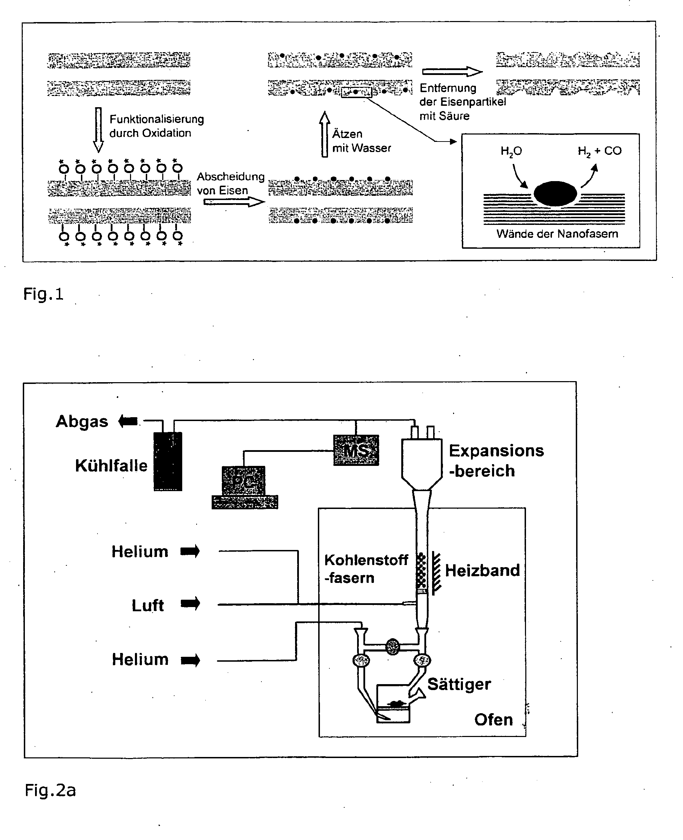

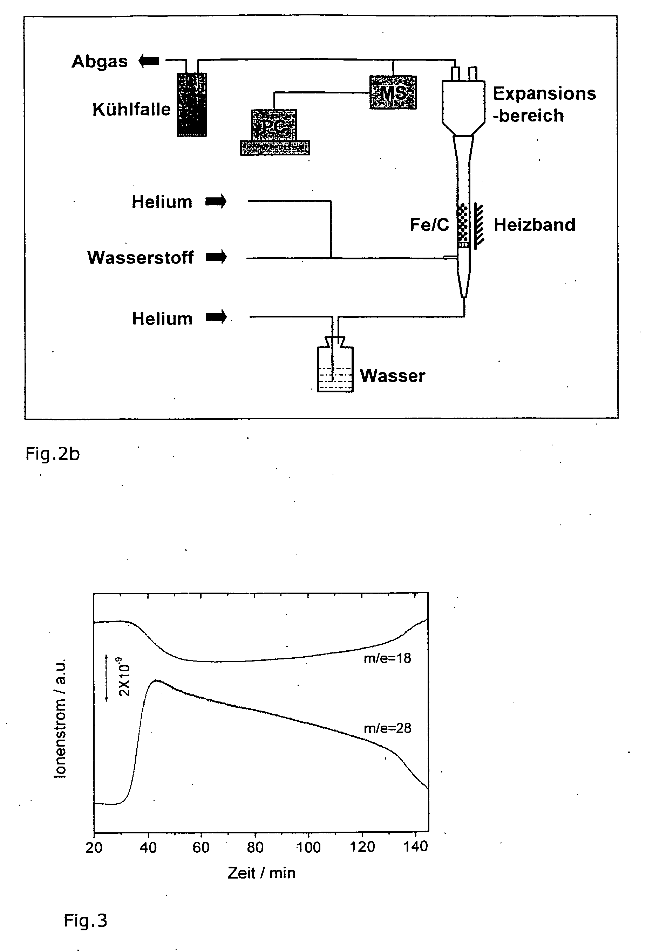

Ein typischer Ätzprozess wird in Figur 1 veranschaulicht. Die MWNTs (innerer Durchmesser: einige zehn nm; äußerer Durchmesser: ca. 100 nm; Applied Sciences Inc., Ohio, USA) wurden zuerst für 2 Stunden unter Rückfluss in konzentrierter Salpetersäure behandelt und danach wurde Eisen aus Ferrocen abgeschieden. Die Abscheidung und das Sintern von Eisennanopartikeln wird in Xia, W. et al., Chem. Mater. 17: 5737-5742 (2005) detailliert beschrieben. Die Eisenbeladung in der vorliegenden Arbeit variiert im Bereich von 5 bis 10 Gew.-% und kann durch die Variation der Menge des Ferrocenprecursors verändert werden. Die mit Eisen beladenen Nanofasern wurden bei 500 °C im Wasserstoff für 1 h reduziert und getempert. Helium wird durch einen Sättiger geleitet, der mit Wasser (Raumtemperatur) gefüllt ist und damit Wasserdampf (1 Vol. %) in Reaktor geleitet (Figur 2). Wasserstoff (10 Vol. %) wurde eingesetzt, um die Eisenkatalysatoren aktiv zu halten.

Die Bildung von CO (m/e = 28) und der Verbrauch von $H_2O$ (m/e = 18) wurden durch Online-Massenspektrometrie bei Probentemperatur oberhalb von 600 °C beobachtet. Die Reaktionstemperatur korreliert mit der Größe der abgeschiedenen Eisenpartikel. Eine höhere Starttemperatur ist für große Katalysatorpartikel erforderlich, wobei für zu kleine Partikel die Desaktivierung sehr schnell ist und dadurch die Reaktion stoppt. Es wurde gefunden, dass die Eisenkatalysatoren bis zu 2 Stunden aktiv sein können, wobei hauptsächlich die Partikelgröße und die Reaktionstemperatur entscheidend sind.

Die Entfernung der Eisenpartikel von der Oberfläche der Kohlenstoffnanofasern kann, wie in Wue, P. et al., Surf. Interface Anal. 36:497-500 (2004) beschrieben, durch wässrige Salzsäure, Mischung aus $HNO_3$ und $H_2SO_4$ erfolgen.

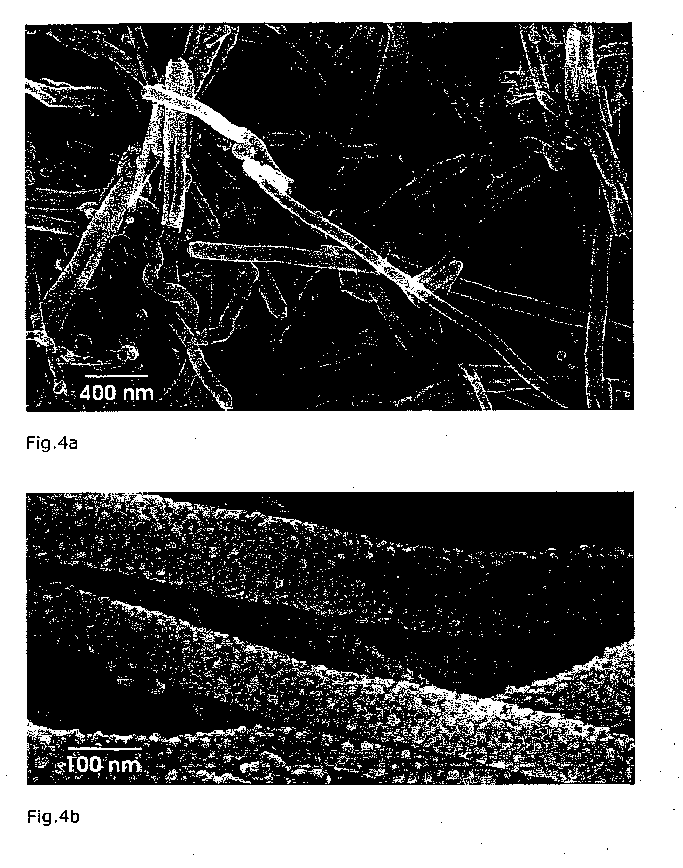

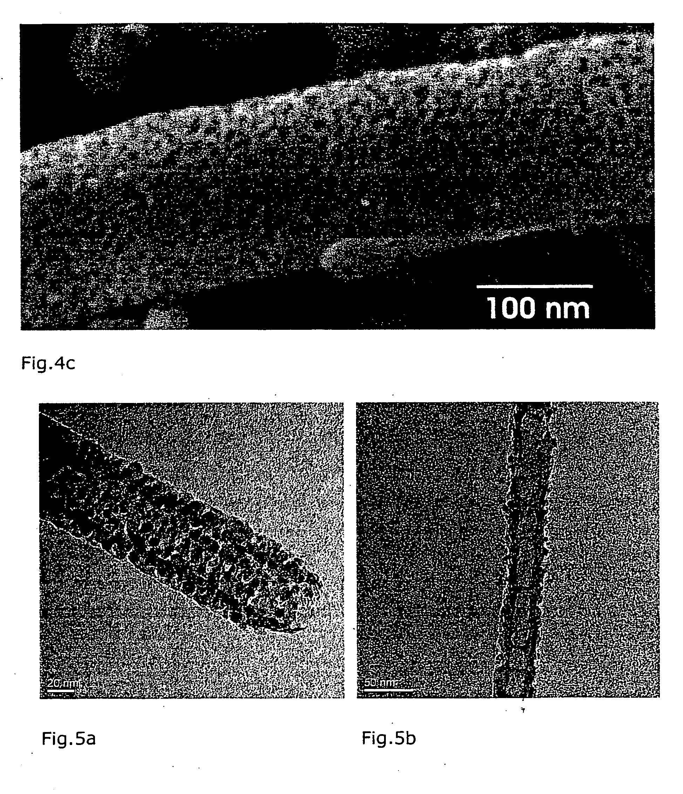

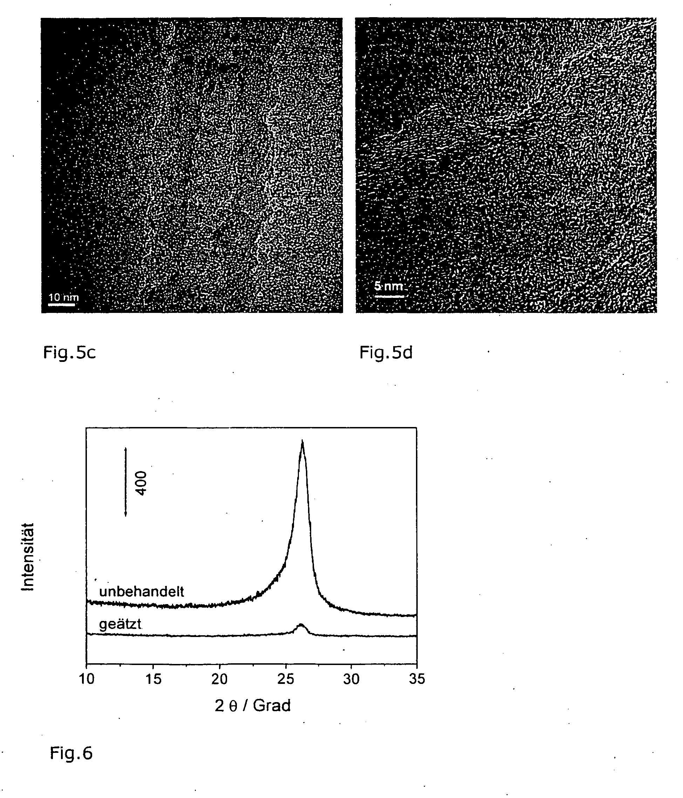

Die Morphologie der Nanofasern wurde mit SEM untersucht. Figur 4a zeigt die Nanofasern im unbehandelten Zustand. Die Existenz von nanoskaligen Eisenoxidpartikeln, die in der Oberfläche der Nanofasern in den geätzten Proben eingebettet wurden, kann beobachtet werden (Figur 4b). Die sphärischen Ätzgruben sind deutlich sichtbar, nachdem die Eisenpartikeln durch das Waschen mit Säure entfernt wurden (Figur 4c). Das in der Figur 5a gezeigte TEM-Bild demonstriert das Einbetten der Eisennanopartikel bedingt durch den Ätzprozess. Die Oberflächenrauhigkeit wurde erheblich durch die Ätzung erhöht, wie durch die TEM-Bilder nach dem Auswaschen der Eisennanopartikel zeigen (Figur 5b-c). Außerdem kann in dem in Figur 5d gezeigten hochauflösenden TEM-Bild die Beschädigung der Wand der Nanofaser beobachtet werden. Ein kugelförmiges Loch wurde in die Nanofaser geätzt, offensichtlich indem die äußeren Wände eine nach der anderen entfernt wurden.

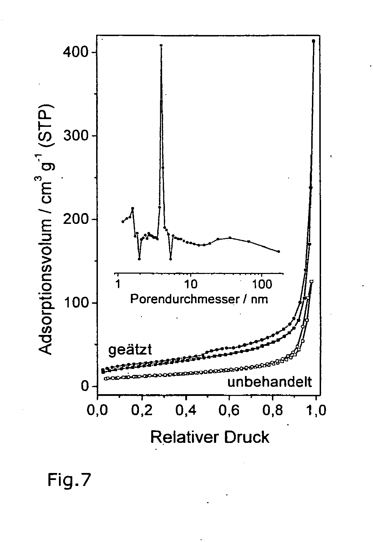

Die Ätzung über einen kurzen Zeitabschnitt resultiert hauptsächlich in Oberflächendefekten, wobei keine nennenswerten Änderungen der Materialeigenschaften beobachtet werden. Durch die Verlängerung der Ätzzeit hingegen können die Materialeigenschaften signifikant geändert werden. Figur 6 zeigt das Ergebnis der Röntgenbeugung (XRD) an Nanofasern, die länger als eine Stunde geätzt wurden. Im Vergleich zu den unbehandelten Nanofasern ist die Signalintensität nach der Ätzung erheblich verringert. Obwohl es nicht sinnvoll ist, die Intensität direkt mit der Kristallinität zu korrelieren, so kann doch ohne Zweifel eine signifikante Zunahme der Unordnung nach der Ätzung von hoch reproduzierbaren XRD-Ergebnissen abgeleitet werden. Kleinere Mesoporen wurden durch die Ätzung erzeugt, wie mit den Stickstoffphysisorptionsmessungen gezeigt werden kann (Figur 7). Bei geätzten Nanofasern wurde eine Hysterese zwischen den Adsorptions- und Desorptionsästen der Isotherme beobachtet und ein Porendurchmesser von einigen Nanometern abgeleitet (Figur 7). Solche kleine Poren sind in unbehandelten MWNTs, welche durch fast perfekte parallele Wände gekennzeichnet werden, nicht nachweisbar. Infolgedessen erhöht sich die spezifische Oberfläche der Nanofasern von ca. 20 ~ 40 m$^2$/g auf 90 ~ 110 m$^2$/g.

Zusammenfassend kann gesagt werden, dass mesoporöse MWNTs mit sphärischen Ätzgruben in einem gezielten, lokalen Ätzprozess hergestellt werden können, der sowohl umweltfreundlich ist als auch auf günstigen Rohstoffen (Eisen und Wasser) basiert. In dem innovativen Prozess findet die Ätzung an der Oberfläche der Nanofasern statt und ist auf die Grenzschicht zwischen den Eisenpartikeln und der Nanofaser limitiert. Alle Teile der Nanofaseroberfläche ohne Eisenpartikel werden durch die Ätzung nicht verändert. Durch die einfache Kontrolle und Variation der Prozessparameter ist die Ätzung äußerst flexibel. Die Anwendungsmöglichkeiten liegen im Bereich der Polymerverbundstoffe, Katatyse und Biosensoren. Wir gehen davon aus, dass die Ätzgruben die Oberflächenmobilität von abgeschiedenen nanoskaligen Katalysatorpartikel effektiv verringern und damit die zur Desaktivierung der Katalysatoren führende Aggregierung (Sintern) vermieden werden kann. Außerdem wird erwartet, dass die erhöhte Oberflächenrauhigkeit für die Immobilisierung funktioneller Proteine in Biosensoren nützlich ist und zu einer wesentlich verbesserten Sauerstofffunktionalisierung führt.

Die Erfindung wird anhand der folgenden Beispiele näher erläutert. Diese Beispiele schränken jedoch den beanspruchten Gegenstand in keiner Weise ein.

## Beispiele

### Beispiel 1

Die mit Eisen beladenen Nanofasern (10 Gew.-%; erhältlich von Applied Sciences Inc., Cedarville, Ohio, USA) wurden bei 500 °C in einem Gemisch aus Wasserstoff und Helium (1:1, 100 ml min$^{-1}$ STP) eine Stunde lang reduziert und getempert. Ein Gesamtgasstrom von 100 ml min$^{-1}$ STP mit einer Wasserstoffkonzentration von 10 Vol.-% und einer Wasserkonzentration von 1 Vol.-% wurde wie folgt erzeugt: Helium (32.3 ml min$^{-1}$ STP) wurde durch einen Sättiger geleitet, der mit Wasser (Raumtemperatur) gefüllt war. Wasserstoff (10 ml min$^{-1}$ STP) und zusätzliches Helium (57.7 ml min$^{-1}$ STP) wurden im Reaktor vor dem Festbett mit dem wasserhaltigen Heliumstrom vereint. Der eingesetzte Wasserstoff (10 Vol.%) diente dazu den Eisenkatalysator aktiv zu halten. Die Kontrolle aller Gasströme wurde durch Online-Massenspektroskopie (MS) gewährleistet. Als das Wassersignal (m/e=18) nach ungefähr 30 Minuten stationär war, wurde der Reaktor von 500°C bis 670°C mit einer Rampe von 20 K min$^{-1}$ geheizt. Die Reaktion begann bei ungefähr 600°C, wie es durch die Bildung von CO (m/e=28) und dem Verbrauch von H$_2$O (m/e=18) massenspektroskopisch belegt wurde. Nach ca. zwei weiteren Stunden Reaktionszeit wurde der Reaktor unter Helium (100 ml min$^{-1}$, STP) mit 10 K min$^{-1}$ auf 450°C abgekühlt. Nach dem Erreichen eines Minimums des Wasserstoffsignal (m/e=2) nach ungefähr 30 Minuten wurde Luft (50 ml min$^{-1}$, STP) zusammen mit Helium (50 ml min$^{-1}$, STP) zudosiert, um kohlenstoffhaltige Ablagerungen oxidativ zu entfernen. Durch die massenspektroskopische Überwachung des Sauerstoffsignals (m/e=32) konnte gezeigt werden, dass das Beseitigen der Verkokung nach ungefähr 5 Minuten beendet war. Der Reaktor wurde bis auf Raumtemperatur abgekühlt. Die geätzte Probe (FeO$_x$/CNF) wurde bei RT unter Rühren in 1 M HNO$_3$ eine Stunde lang gewaschen, anschließend gefiltert und zwecks weiterer Charakterisierung getrocknet.

### Beispiel 2

Wird die Eisenbeladung im ersten Schritt auf 5 Gew.-% gesenkt und alle anderen Parameter aus Beispiel 1 konstant gehalten, so beträgt die Reaktionszeit 1,5 h.

### Beispiel 3

Wird unter Konstanthaltung aller anderen Parameter aus Beispiel 1 die maximale Temperatur im dritten Schritt von 670 °C auf 650 °C gesenkt, so beträgt die Reaktionszeit 1 h.

**Patentansprüche**

1. Ein Verfahren zur Ätzung der Oberfläche von Kohlenstofffasern, umfassend die folgenden Schritte:

   (a) Funktionalisierung der Oberfläche der Kohlenstofffasern durch Oxidation,
   (b) Abscheidung von Metallpartikeln auf der funktionalisierten Oberfläche,
   (c) Ätzen der Oberfläche durch Behandlung mit Wasserdampf und
   (d) Entfernen der Metallpartikel durch Säurebehandlung.

2. Verfahren nach Anspruch 1, wobei die Kohlenstofffasern Kohlenstoffnanofasern sind, die insbesondere

   (i) aus Kohlenwasserstoffen erhältlich sind, und/oder
   (ii) einen äußeren Durchmesser von 50 bis 500 nm, vorzugsweise von etwa 100 nm aufweisen, und/oder
   (iii) eine Oberfläche von 10 bis 60 m$^2$/g, vorzugsweise von 20 bis 40 m$^2$/g aufweisen.

3. Verfahren nach Anspruch 1, wobei die Kohlenstofffasern Mikrofasern sind, die insbesondere

   (i) aus Polyacrylnitril (PAN), vorzugsweise durch Pyrolyse erhältlich sind, und/oder
   (iv) einen äußeren Durchmesser von 3 bis 10

μm, vorzugsweise von etwa 6 μm aufweisen, und/oder

(ii) eine Oberfläche von kleiner als 1 m$^2$/g aufweisen.

4. Verfahren nach einem oder mehreren der Ansprüche 1 bis 3, wobei die Funktionalisierung der Oberfläche durch oxidative Behandlung, vorzugsweise durch Erhitzung mit oxidierenden Säuren oder Sauerstoffplasmabehandlung, besonders bevorzugt durch Erhitzung mit Salpetersäure erfolgt.

5. Verfahren nach einem oder mehreren der Ansprüche 1 bis 4, wobei

(i) die Metallpartikel ausgewählt sind aus Fe, Co und Ni, und vorzugsweise Fe sind, und/oder
(ii) die Metallbeladung 1 bis 20, vorzugsweise 5 bis 10 Gew.-% bezogen auf das Gesamtgewicht der beladenen Kohlenstoffnanofasern beträgt, und/oder
(iii) die Abscheidung der Metallpartikel durch In-Kontakt-Bringen mit gelösten Metallsalzen oder Metallocenen und vorzugsweise Ferrocenen, insbesondere bei einer Temperatur von 100 bis 600 °C und nachfolgend Reduktion mit Wasserstoff bei einer Temperatur von 300 bis 800 °C, vorzugsweise bei etwa 500 °C erfolgt.

6. Verfahren nach einem oder mehreren der Ansprüche 1 bis ,5 wobei das Ätzen durch Behandlung mit Wasserdampf in einer Heliumatmosphäre erfolgt, wobei vorzugsweise

(i) der Wasserdampfgehalt der Heliumatmosphäre 0,1 bis 10, besonders bevorzugt etwa 1 Vol.-% beträgt, und/oder
(ii) die Ätzung bei einer Temperatur von 500 bis 800 °C, besonders bevorzugt oberhalb von 600 °C erfolgt, und/oder
(iii) die Heliumatmosphäre 1 bis 20, vorzugsweise etwa 10 Vol.-% H$_2$ enthält, um den Metallkatalysator aktiv zu halten.

7. Verfahren nach einem oder mehreren der Ansprüche 1 bis 6, wobei die Entfernung der Metallpartikel durch Behandlung mit einer Säure, insbesondere wässriger Salzsäure oder einem Gemisch aus HNO$_3$/H$_2$SO$_4$ erfolgt.

8. Verfahren nach einem oder mehreren der Ansprüche 1 bis 7, wobei die geätzten Kohlenstofffasern Kohlenstoffnanofasern sind, die eine spezifische Oberfläche von 90 bis 100 m$^2$/g aufweisen oder Kohlenstoffmikrofasern sind, die eine spezifische Oberfläche von 5 bis 50 m$^2$/g aufweisen.

9. Geätzte Kohlenstofffasern, erhältlich durch ein Verfahren, wie in Ansprüchen 1 bis 8 definiert.

10. Verwendung der geätzten Kohlenstofffasern gemäß Anspruch 9 in Verbundwerkstoffen, Energiespeichern, als Sensoren, als Adsorptionsmittel, Träger für heterogene Katalysatoren und als katalytisch aktives Material nach zusätzlicher Sauerstofffunktionalisierung.

**Claims**

1. A process for etching the surface of carbon fibers, which comprises the following steps:

(a) functionalization of the surface of the carbon fibers by oxidation,
(b) deposition of metal particles on the functionalized surface,
(c) etching of the surface by treatment with water vapor and
(d) removal of the metal particles by acid treatment.

2. Process according to Claim 1, where the carbon fibers are carbon nanofibers which, in particular,

(i) can be obtained from hydrocarbons and/or
(ii) have an external diameter from 50 to 500 nm, preferably about 100 nm, and/or
(iii) have a surface area of from 10 to 60 m$^2$/g, preferably from 20 to 40 m$^2$/g.

3. Process according to Claim 1, where the carbon fibers are microfibers which, in particular,

(i) can be obtained from polyacrylonitrile (PAN), preferably by pyrolysis, and/or
(iv) have an external diameter of from 3 to 10 μm, preferably about 6 μm, and/or
(ii) have a surface area of less than 1 m$^2$/g.

4. Process according to one or more of Claims 1 to 3, where the functionalization of the surface is effected by oxidative treatment, preferably by heating with oxidizing acids or oxygen plasma treatment, particularly preferably by heating with nitric acid.

5. Process according to one or more of Claims 1 to 4, where

(i) the metal particles are selected from among Fe, Co and Ni and are preferably Fe and/or
(ii) the metal loading is from 1 to 20% by weight, preferably from 5 to 10% by weight, based on the total weight of the laden carbon nanofibers, and/or
(iii)the deposition of the metal particles is effected by contacting of the fibers with dissolved metal salts or metallocenes, preferably ferrocenes, in particular at a temperature of from 100 to 600°C, and subsequent reduction with hydrogen at a temperature of from 300 to 800°C, preferably about 500°C.

6. Process according to one or more of Claims 1 to 5, where etching is effected by treatment with water vapor in a helium atmosphere, with preference being given to

    (i) the water vapor content of the helium atmosphere being from 0.1 to 10% by volume, particularly preferably about 1% by volume, and/or
    (ii) etching being carried out at a temperature of from 500 to 800°C, particularly preferably above 600°C, and/or
    (iii) the helium atmosphere containing from 1 to 20% by volume, preferably about 10% by volume, of $H_2$ in order to keep the metal catalyst active.

7. Process according to one or more of Claims 1 to 6, where the removal of the metal particles is effected by treatment with an acid, in particular aqueous hydrochloric acid or a mixture of $HNO_3/H_2SO_4$.

8. Process according to one or more of Claims 1 to 7, where the etched carbon fibers are carbon nanofibers which have a specific surface area of from 90 to 100 $m^2$/g or carbon microfibers which have a specific surface area of from 5 to 50 $m^2$/g.

9. Etched carbon fibers which can be obtained by a process as defined in any of Claims 1 to 8.

10. Use of the etched carbon fibers according to Claim 9 in composites, energy stores, as sensors, as adsorbents, supports for heterogeneous catalysts and as catalytically active material after additional oxygen functionalization.

**Revendications**

1. Procédé pour la gravure de la surface de fibres de carbone comprenant les étapes suivantes :

    (a) de fonctionnalisation de la surface des fibres de carbone par oxydation,
    (b) de dépôt de particules de métal sur la surface fonctionnalisée ;
    (c) de gravure de la surface par traitement avec de la vapeur d'eau ; et
    (d) d'élimination des particules de métal par traitement à l'acide.

2. Procédé selon la revendication 1, dans lequel les fibres de carbone sont des nanofibres de carbone, lesquelles sont en particulier

    (i) obtenues à partir d'hydrocarbures, et/ou
    (ii) présentent un diamètre externe de 50 à 500 nm, de préférence d'environ 100 nm, et/ou
    (iii) présentent une surface de 10 à 60 $m^2$/g, de préférence de 20 à 40 $m^2$/g.

3. Procédé selon la revendication 1, dans lequel les fibres de carbone sont des microfibres, lesquelles sont en particulier

    (i) obtenues à partir de polyacrylonitrile (PAN), de préférence par pyrolyse, et/ou
    (iv) présentent un diamètre externe de 3 à 10 $\mu$m, de préférence d'environ 6 $\mu$m, et/ou
    (ii) présentent une surface inférieure à 1 $m^2$/g.

4. Procédé selon l'une ou plusieurs quelconques des revendications 1 à 3, la fonctionnalisation de la surface étant réalisée par traitement oxydant, de préférence par chauffage avec des acides oxydants ou par traitement au plasma d'oxygène, encore mieux par chauffage avec de l'acide nitrique.

5. Procédé selon l'une ou plusieurs quelconques des revendications 1 à 4, dans lequel

    (i) les particules de métal sont choisies parmi Fe, Co et Ni, et de préférence sont en Fe, et/ou
    (ii) la charge de métal est de 1 à 20, de préférence de 5 à 10 % en poids, rapportés au poids global des nanofibres de carbone chargées et/ou
    (iii) le dépôt des particules de métal est réalisé par mise en contact avec des sels métalliques ou des métallocènes dissous et de préférence des ferrocènes, en particulier à une température de 100 à 600°C et par réduction subséquente avec de l'hydrogène à une température de 300 à 800°C, de préférence à environ 500°C.

6. Procédé selon l'une ou plusieurs quelconques des revendications 1 à 5, dans lequel la gravure est réalisée par traitement avec de la vapeur d'eau dans une atmosphère d'hélium, dans lequel de préférence

    (i) la teneur en vapeur d'eau de l'atmosphère d'hélium est de 0,1 à 10, encore mieux d'environ 1 % en volume, et/ou
    (ii) le décapage est réalisé à une température de 500 à 800°C, encore mieux supérieure à 600°C, et/ou
    (iii) l'atmosphère d'hélium contient de 1 à 20, de préférence environ 10 % en volume de $H_2$ pour maintenir le catalyseur de métal actif.

**7.** Procédé selon l'une ou plusieurs quelconques des revendications 1 à 6, dans lequel l'élimination des particules de métal est réalisée par traitement avec un acide, en particulier avec de l'acide chlorhydrique aqueux ou avec un mélange constitué de $HNO_3/H_2SO_4$

**8.** Procédé selon l'une ou plusieurs quelconques des revendications 1 à 7, dans lequel les fibres de carbone gravées sont des nanofibres de carbone qui présentent une surface spécifique de 90 à 100 $m^2$/g ou sont des microfibres de carbone qui présentent une surface spécifique de 5 à 50 $m^2$/g.

**9.** Fibres de carbone gravées obtenues par un procédé comme défini dans les revendications 1 à 8.

**10.** Utilisation des fibres de carbone gravées selon la revendication 9 dans des composites, des dispositifs de stockage d'énergie, comme capteurs, comme agents d'adsorption, supports pour des catalyseurs hétérogènes et comme matériau actif en catalyse après une fonctionnalisation supplémentaire à l'oxygène.

Fig.1

Fig.2a

Abgas ◀

Kühlfalle

MS

PC

Expansions
-bereich

Helium ➡

Wasserstoff ➡

Fe/C    Heizband

Helium ➡

Wasser

Fig.2b

Ionenstrom / a.u.

$2 \times 10^{-9}$

m/e=18

m/e=28

20    40    60    80    100    120    140

Zeit / min

Fig.3

Fig.4a

Fig.4b

Fig.4c

Fig.5a

Fig.5b

Fig.5c

Fig.5d

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Baughman, R. H. et al.** *Science,* 2002, vol. 297, 787-792
- **de Jong, K. P. ; Geus, J. W.** *Catal. Rev.-Sci. Eng.,* 2000, vol. 42, 481-510
- **Nhut, J. M. et al.** *Appl. Catal. A.,* 2003, vol. 254, 345-363
- **Calvert, P.** *Nature,* 1999, vol. 399, 210-21
- **Xia, W. et al.** *Chem. Mater.,* 2005, vol. 17, 5737-5742
- **Dai, H.** *Acc. Chem. Res.,* 2002, vol. 35, 1035-5742
- **Banerjee, S. et al.** *Adv. Mater.,* 2005, vol. 17, 17-29
- **Liu, J. et al.** *Science,* 1998, vol. 280, 1253-1256
- **Ishigami, M. et al.** *Phys. Rev. Lett.,* 2001, vol. 93, 196803, 4
- **Osváth, Z. et al.** *Phys. Rev. B.,* 2005, vol. 72, 045429, 1-0454296
- **Fan, Y. et al.** *Adv. Mater.,* 2002, vol. 14, 130-133
- **Wue, P. et al.** *Surf. Interface Anal.,* 2004, vol. 36, 497-500